Europäisches Patentamt

European Patent Office

Office européen des brevets

(11) Publication number: **0 329 259**
**A1**

## (12) EUROPEAN PATENT APPLICATION

(21) Application number: **89200397.1**

(22) Date of filing: **17.02.89**

(51) Int. Cl.⁴: **B23D 15/00**

(30) Priority: **18.02.88 NL 8800418**

(43) Date of publication of application:
**23.08.89 Bulletin 89/34**

(84) Designated Contracting States:
**AT BE CH DE ES FR GB GR IT LI LU NL SE**

(71) Applicant: **Walker-Hagou B.V.**
**Industrieweg 9**
**NL-5531 AD Bladel(NL)**

(72) Inventor: **Bijl, Roy**
**Hobbel 8**
**5561 TN Riethoven(NL)**

(74) Representative: **de Vries, Johannes Hendrik**
**Fokke et al**
**Octrooibureau Los en Stigter B.V. P.O. Box**
**20052**
**NL-1000 HB Amsterdam(NL)**

(54) **Angular cutter.**

(57) An angular cutter comprises a stationary frame (1, 2), a lower knife (5) provided on a first support part (4) and an upper knife (7) secured to a second support part (6) mounted movable relative to the first support part (4). The lower and upper knives (5, 7) are provided with two mutually co-operating cutting edges (8) extending from their tip end (9) at an angle with respect to each other, and the cutting edges of the lower knife defining a cutting plane. According to the invention the second support part (6) together with the upper knife (7) is connected to the first support part (4) pivotable about a pivot axis (12) extending substantially parallel to the cutting plane.

fig.3

EP 0 329 259 A1

## Angular cutter

The invention relates to an angular cutter comprising a stationary frame, a lower knife provided on a first support part and an upper knife secured to a second support part mounted movable relative to the first support part, wherein the lower and upper knives are provided with two mutually co-operating cutting edges extending from their tip end at an angle with respect to each other, and the cutting edges of the lower knife defining a cutting plane.

In a known angular cutter of this type the upper knife is mounted to a ram which is guided relative to the stationary frame by means of a linear guid so as to be displaceable vertically up and down.

This known angular cutter has the disadvantage that the guide is exposed to large warping torques as a result of the cutting force of the upper knife, as a consequence whereof the guide should be constructed very heavily. Furthermore, the length of the knives has to be limited in this construction since an increase in said length will increase the warping torque on the guide proportionally.

It is an object of the invention to provide an angular cutter of the type mentioned in the preamble, which does not have these disadvantages and has a favourable structure regarding the transmittal of forces.

For this purpose the angular cutter according to the invention is characterized in that the second support part together with the upper knife is connected to the first support part pivotable about a pivot axis extending substantially parallel to the cutting plane.

By employing a pivot axis for the second support part extending substantially parallel to the cutting plane the cutting force causes a force directed perpendicular to the pivot axis and a torque directed about said pivot axis. Said force and said torque can be absorbed in a simple way such that it is sufficient to have a light guide for absorbing only the force. As a result there may be used a very simple suspension, for instance a pin-hole-joint, without harming the ruggedness. Due to the fact that the torque exerted by the cutting force of the knives has no influence on the required strength of the suspension, the length of the knives can be enlarged without further preface.

According to a favourable embodiment of the angular cutter acccording to the invention the pivot axis is spaced a short distance from the cutting plane such that, during the cutting operation, the upper knife has a horizontal component of displacement which is directed away from the tip of the cutting edges.

Due to this measurements the portion of the upper knife already having cut the work piece will release therefrom. This improves the surface roughness of the cut edge of the work piece and reduces the wear of the upper knife.

It is possible therewith that the pivot axis is arranged below the cutting plane at the end of the tip of the cutting edges.

It is advantageously therein if a rectilinear displacement means engages the second support part at the end of the cutting edges facing away from the tip thereof.

In this embodiment the available cutting force of the upper knife has its maximum at the tip of the upper knife when the force excerted by the displacement means remains the same. Since initiating the cut, which takes place at a tip of the upper knife, requires the largest force, the force of the displacement means will be utilized very efficiently and an excessive dimentioning of this displacement means is prevented. Moreover, excessive material thicknesess can be processed if the cutting length is kept proportionally shorter than the knife length.

A very favourable embodiment of the angular cutter according to the invention has the feature that between the first and second support parts there is arranged a guide extending perpendicular to the cutting plane, the guide guiding the second support part parallel to the pivot axis in a confined fashion.

In this way there is provided a very simple but very rugged guide for the second support part, so that a rigid construction and hence an accurate cutting action is ensured with a minimum of constructional effort.

In an embodiment of the angular cutter, wherein the upper and lower knives have a fixed cutting edge angle and are commonly rotatable relative to the stationary frame about an axis of rotation aligned with the tip of the lower knife and extending perpendicular to the cutting plane, and the first support part being rotatably mounted to the stationary frame, it is very favourable when the second support part together with the upper knife fixed thereto are only and directly connected to the first support part pivotable about said pivot axis.

Since the guide for the pivoting movement on behalf of the cutting operation also provides for the guiding of the turning movement on behalf of adjusting the upper knife a seperate guide between the first and second support parts is redundant and a static over determination of the structure is prevented. As a result unnecessary high accuracy requirements for preventing frictional losses in or overload of guides causing the over determination are avoided. Also, no space is lost due to an additional parallel guide between the upper and lower knives, so that said space can be utilized for arranging the upper and lower knives.

If a work support table fixed to the stationary frame is used it is favourable when the fixed work support table runs through to the neighbourhood of the lower knife on the side of the tip thereof, and there being provided in the work support table a circular-segment-shaped opening for passage of the lower and upper knives.

Due to this structure also relatively small work pieces can be clamped easily and safely onto the fixed work support table without the risk of displacing the work piece when the lower and upper knives are adjusted.

The invention will hereafter be elucidated with reference to the drawing, which shows an embodiment of the angular cutter according to the invention by way of example.

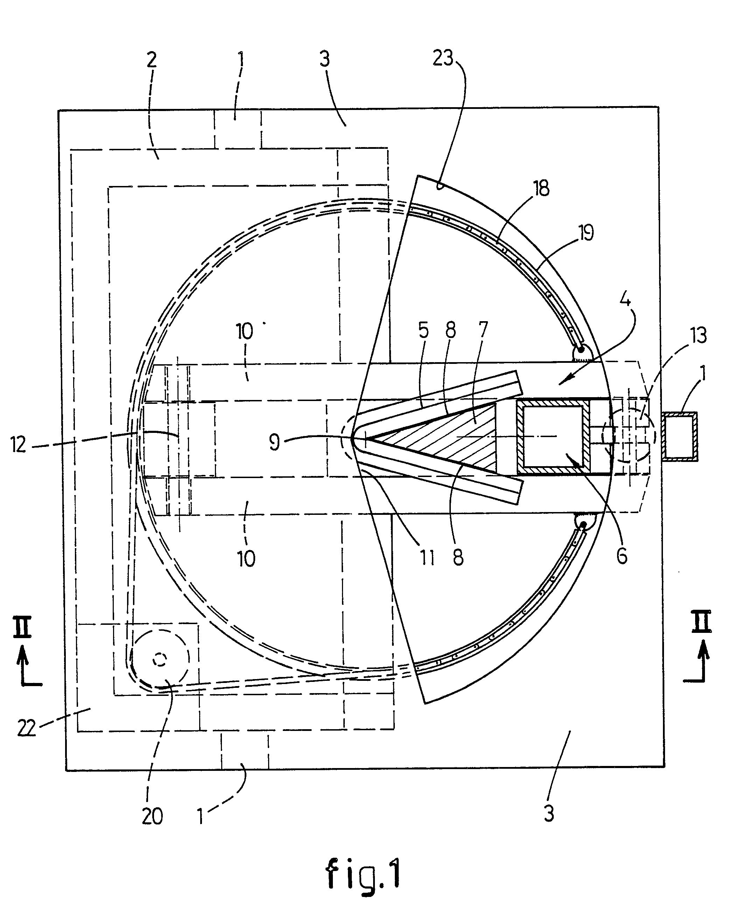

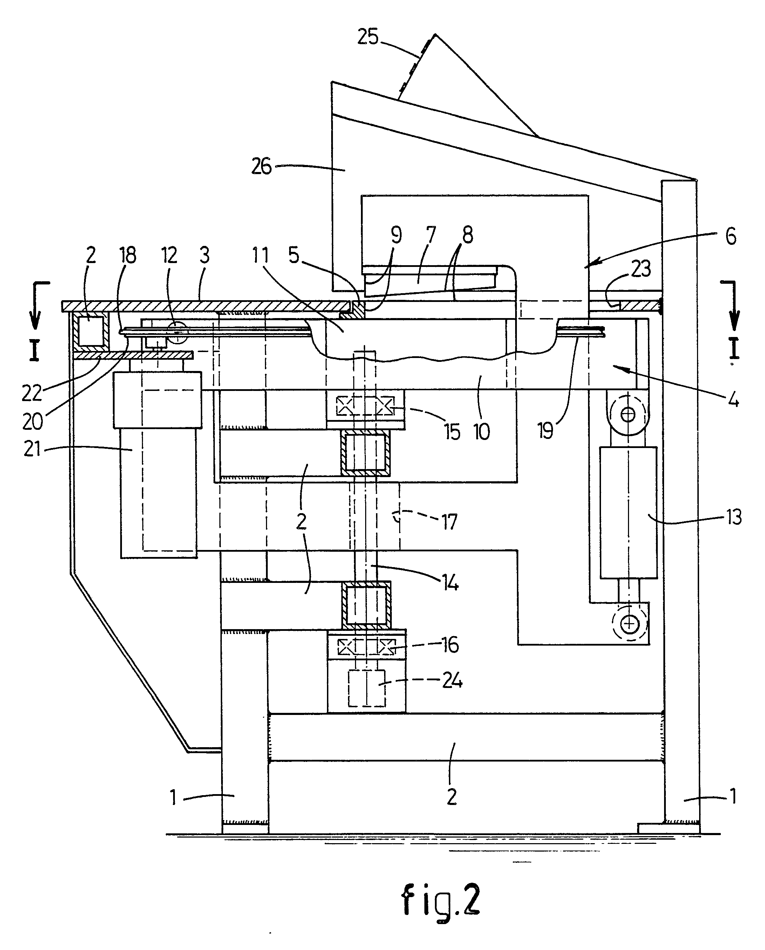

Fig. 1 is a sectional view of an embodiment of the angular cutter according to the invention, seen along the line I-I in fig. 2.

Fig. 2 is a sectional view along the line II-II in fig. 1,

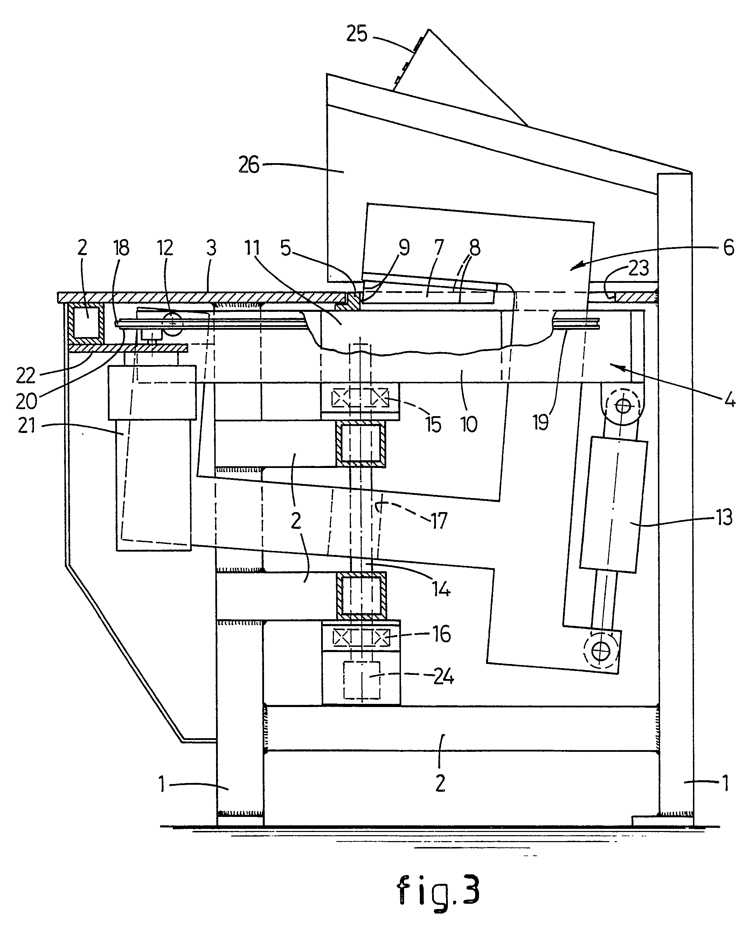

Fig. 3 is a sectional view corresponding to that of fig. 2 wherein, however, the upper knife is shown in another position.

The angular cutter shown in the drawing comprises a stationary frame including three posts 1 and a plurality of cross beams 2 connected thereto. Both the posts 1 and the cross beams 2 are constructed of tube sections having a rectangular cross-section.

On the upper side of the frame there is provided a work support table 3 for supporting a work piece, particularly a metal sheet. The work support table 3 will mostly be provided with means for positioning and/or clamping the work piece, such as adjustable stops and/or clamping fixtures (not shown).

The angular cutter further comprises a lower knife 5 mounted on a first support part 4, and an upper knife 7 fixed to a second support part 6 which is mounted movable relative to the first support part 4. Both the lower knife 5 and the upper knife 7 are provided with two each mutually co-operating cutting edges 8 extending from a tip 9 at a fixed angle, in this case of 30°, with respect to each other. The upper and lower knives are shaped such that the upper knife 7 can move into the lower knife 5 whereby the co-operating cutting edges 8 thereof are able to cut the work piece. The upper surface of the lower knife 5 is substantially flush with the upper surface of the work support table 3. The cutting edges 8 of the upper knife 7, in the upper position thereof, extends inclined upwardly from the tip 9 so that the cutting action starts at the tip 9 and is displaced thereupon along the cutting edges 8 away from the tip 9.

The first support part 4 includes two parallel spaced, mutually connected horizontal support beams 10 to which the lower knife 5 is attached. Under the lower knife 5 between the support beams 10 there is an additional support block 11 for the lower knife 5, which is provided with a passage for the cut work piece parts.

The second support part 6 is constructed of a plurality of tube sections having a large rectangular cross section so as to effectuate a very stiff structure. The second support part 6 is pivotable about a horizontal pivot shaft 12 extending parallel to the work support table 3 and perpendicular to the plane of symmetry of the upper knife 5 and the lower knife 7 and the pivot shaft 12 being connected to the first support part 4. The pivot shaft 12 extends through both support beams 10 of the first support part 4 and through the tube section of the second support part 6 and forms a rugged bearing for the second support part 6.

The pivot shaft 12 is connected to the first support part 4 on the side of the knife tip 9 and is arranged a small distance below the cutting plane difined by the cutting edges 8 of the lower knife 5.

At the end of the first support part 4 facing away from the pivot shaft there is pivotally attached an end of a hydraulic cylinder-rod assembly 13 of which the other end is pivotally connected to the lower portion of the second support part 6. The cylinder-rod assembly 13 serves as displacement means for the upper knife 7 so as to effect the cutting movement of the upper knife 7.

The second support part 6 together with the upper knife 7 is guided relative to the first support part since the upright tube section extending near the upper knife 7 is guided between both of the support beams 10 of the first support part 4. The sides of the tube section extending parallel to the plane of symmetry of the upper knife 7 and being guided between the support beams 10 are constructed as guiding surfaces co-operating with guiding surfaces on the inner side of the support beams 10. This results in a confinement of the second support part parallel to the cutting plane perpendicular to the plane of symmetry of the upper and lower knives and hence in a very stiff guide. The guiding surfaces of the first or second support part may consist of a bearing material such as bearing bronze.

The first support part 4 is provided on a rotary shaft 14 being aligned with the tip 10 of the lower knife 5 and extending perpendicular to the cutting plane. The rotary shaft 14 is journalled in bearings 15 and 16 mounted on two cross beams 2 of the stationary frame. The upper end of the rotary shaft 14 is attached in the support block 11 between the support beams 10, and the rotary shaft 14 is guided through an opening 17 in the second support part 6 between the bearings 14 and 16. The first support part 4 is rotatable about the rotary shaft 14 by means of a chain 18 being guided about a circular segment-shaped rail 19 of the first support part 4 and being in engagement with a tooth gear 20. This tooth gear 20 is mounted on the shaft of an electric motor 21 attached to a tie plate 22 of the stationary frame. The ends of the chain 17 are tied to the support beams 10.

In the work support table there is saved a circular-segment-shaped opening 23 for the passage of the lower knife 5 and the upper knife 7. The opening 23 is dimensioned such that the first and second support parts 4, 6 and thereby the lower and upper knives 5, 7 are permitted to be commonly displaced about an angle of 150°. As a result, it is possible to cut out a wedge having a minimum angle of 30° -the angle between the cutting edges 8- and a maximum angle of 150°, wherein at least two trips of the upper knife are required when wedges of more than 30° are cut.

At the lower end of the rotary shaft 14 there is provided an angle measuring means 24 electronically measuring the angular rotation of the rotary shaft 14 relative to the stationary frame. This angle measuring means 24 forms part of the computer control of the angular cutter, wherein both extreme angular positions of the lower and upper knives 5 and 7 may be entered by means of a keyboard 25 whereupon the electric motor 21 is adapted to be controlled by means of the information supplied by the angle measuring means 24.

The fixed work support table 3, on the side of the knife tip 9, extends through to the neighbourhood of the lower knife 5 so that also small work pieces are permitted to be clamped on the work support table 3 in a simple and safe manner. Above the work support table 3 over the upper knive 7 and the second support part 6 connected thereto there is provided a protectional cap which is at least partly transparant for permitting a visable control of the upper and lower knives 6, 5.

Acccording to the invention there is provided an angular cutter comprising only very little parts but nevertheless having a multilateral rugged and safe construction.

The invention is not restricted to the embodiment shown in the drawing by way of example, which can be varied in different way's within the scope of the invention.

## Claims

1. Angular cutter comprising a stationary frame, a lower knife provided on a first support part and an upper knife secured to a second support part mounted movable relative to the first support part, wherein the lower and upper knives are provided with two mutually co-operating cutting edges extending from their tip end at an angle with respect to each other, and the cutting edges of the lower knife defining a cutting plane, **characterized** in that the second support part together with the upper knife is connected to the first support part pivotable about a pivot axis extending substantially parallel to the cutting plane.

2. Angular cutter according to claim 1, **characterized** in that the pivot axis is spaced a short distance from the cutting plane such that, during the cutting operation, the upper knife has a horizontal component of displacement which is directed away from the tip of the cutting edges.

3. Angular cutter according to claim 2, **characterized** in that the pivot axis is arranged below the cutting plane at the end of the tip of the cutting edges.

4. Angular cutter according to claim 3, **characterized** in that a rectilinear displacement means engages the second support part at the end of the cutting edges facing away from the tip thereof.

5. Angular cutter according to claim 4, **characterized** in that between the first and second support parts there is arranged a guide extending perpendicular to the cutting plane, the guide guiding the second support part parallel to the pivot axis in a confined fashion.

6. Angular cutter according to claim 5, **characterized** in that the first and second support parts have two mutually co-operating guiding surfaces.

7. Angular cutter according to one of the preceding claims, **characterized** in that the second support part comprises beam sections having a substantially rectangular cross section.

8. Angular cutter according to one of the preceding claims, wherein the upper and lower knives have a fixed cutting edge angle and are commonly rotatable relative to the stationary frame about an axis of rotation aligned with the tip of the lower knife and extending perpendicular to the cutting plane, and the first support part being rotatably mounted to the stationary frame, **characterized** in that the second support part together with the upper knife fixed thereto are only and directly connected to the first support part pivotable about said pivot axis.

9. Angular cutter according to claim 8, having a work support table fixed to the stationary frame, **characterized** in that the fixed work support table runs through to the neighbourhood of the lower knife on the side of the tip thereof, and there being provided in the work support table a circular-segment shaped opening for passage of the lower and upper knives.

10. Angular cutter according to claim 8 or 9, **characterized** in that the first support part is driven by a motor which is controlled by means of an electronic angle measuring means acting between the frame and the first support part.

fig.1

fig.2

fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CA-A-1 165 992 (ICETON)<br>* Whole document *<br>--- | 1,2,8 | B 23 D 15/00 |
| A | EP-A-0 102 625 (FAZIS)<br>--- | | |
| A | DE-A-3 433 658 (FAZIS)<br>--- | | |
| A | US-A-2 342 946 (LE TOURNEAU)<br>--- | | |
| A | DE-A-2 040 742 (SIEMPELKAMP)<br>--- | | |
| A | GB-A-2 111 891 (FOREMAN)<br>----- | | |

TECHNICAL FIELDS SEARCHED (Int. Cl.4)

B 23 D
B 26 D
B 30 B

The present search report has been drawn up for all claims

| Place of search | Date of completion of the search | Examiner |
|---|---|---|
| THE HAGUE | 18-05-1989 | BERGHMANS H.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)